# EUROPÄISCHE PATENTSCHRIFT

(11) **EP 1 963 728 B1**
(45) Veröffentlichungstag und Bekanntmachung des Hinweises auf die Patenterteilung: **20.01.2010**
(21) Anmeldenummer: 06806385.8
(22) Anmeldetag: 19.10.2006
(51) Int. Cl.: F16L 37/098

(54) **KUPPLUNG**
COUPLING
RACCORD

(30) Priorität: 16.12.2005 DE 102005060135
(43) Veröffentlichungstag der Anmeldung: 03.09.2008
(73) Patentinhaber: A. RAYMOND ET CIE, 38000 Grenoble (FR)
(72) Erfinder: FEGER, Axel, 79540 Lörrach (DE); TREDE, Michael, F-68440 Habsheim (FR)
(74) Vertreter: Rüttgers, Joachim
(86) Internationale Anmeldenummer: PCT/EP2006/010074
(87) Internationale Veröffentlichungsnummer: WO 2007/073789

(56) Entgegenhaltungen:
- EP-A1- 0 459 016
- EP-A1- 1 380 791
- DE-A1- 19 540 784
- DE-C1- 4 413 346

## Beschreibung

Die Erfindung betrifft eine Kupplung gemäß dem Oberbegriff des Patentanspruches 1.

Eine derartige Kupplung ist aus EP 1 380 791 A1 bekannt. Diese Kupplung zum lösbaren Verbinden von zwei Leitungsenden eines Fluidleitungssystems verfügt über ein Aufnahmeteil und über ein in das Aufnahmeteil einfügbares Sicherungsteil. Das Sicherungsteil ist mit einer umfänglich geschlossenen Ringhülse ausgebildet, an der Ober Federstege angeformte Hinterraststücke angebracht sind. Die Hinterraststücke liegen mit an ihren von der Ringhülse abgewandten Enden ausgebildeten Schrägflächen teilweise unter einem an dem Aufnahmeteil ausgebildeten, radial nach innen einkragenden Stirnbund, um das Sicherungsteil gegen einem unbeabsichtigten Herausrutschen aus dem Aufnahmeteil vor einem Einfügen eines Einsteckteiles zu sichern. Die Hinterraststücke dienen zum Hintergreifen eines an einem in die Kupplung einzufügenden Einsteckteil ausgebildeten Rückhaiteringes, wobei einige Hinterraststücke mit aus den Freimachungen hinausragenden Anlenkhebeln ausgebildet sind, die radial nach innen bewegbar sind und mit an dem Aufnahmeteil ausgebildeten Vorsprüngen zusammenwirken, um das Sicherungsteil zusammen mit dem Einsteckteil in axialer Richtung aus der Überdeckung durch den Stimbund heraus so zu verschieben, dass die Hinterraststücke freiliegen und zum Lösen des Hintergriffes mit dem Rückhaltering eines in die Kupplung eingefügten Einsteckteites in radialer Richtung bewegbar sind.

Aus EP 0 459 016 A1 ist eine Kupplung zum unlösbaren Verbinden von zwei Leitungsenden eines Fluidleitungssystems bekannt, die über ein in erster Linie zu Montagezwecken über eine Schraubverbindung zweiteilig ausgebildetes Aufnahmeteil zur Aufnahme eines mit einem Rückhaltering ausgebildeten Einsteckteiles und über ein in das Aufnahmeteil einfügbares Sicherungsteil verfügt. Das Sicherungsteil ist mit wenigstens einem Hinterraststück ausgebildet, mit dem ein Einsteckteil durch Hinterrasten des Rückhalteringes mit dem Aufnahmeteil verbindbar ist. Weiterhin weist das Sicherungsteil eine umfänglich geschlossene Ringhülse auf, wobei an einer Seite der Ringhülse über jeweils einen in radialer Richtung federnden sowie sich axial erstreckenden Federsteg das oder jedes Hinterraststück angesetzt ist und wobei das oder jedes Hinterraststück von einer radial außen liegenden, völlig geschlossenen Abdeckwand des Aufnahmeteiles bedeckt ist, so dass das oder jedes Hinteffaststück von einem Zugriff von außen vollständig abgeschirmt ist. Die Hinterraststücke liegen mit ihren von der Ringhülse abgewandten Enden an einem an dem Aufnahmeteil ausgebildeten, radial nach innen einkragenden Ringbund an, um das Sicherungsteil gegen ein unbeabsichtigtes Herausrutschen aus dem Aufnahmeteil vor einem Einfügen eines Einsteckteiles zu sichern. Aufgrund der vollständigen Abschirmung des Sicherungsteiles ist jedoch keinerlei Kontrolle beispielsweise hinsichtlich einer ordnungsgemäßen Anordnung des Sicherungsteites in dem Aufnahmeteil möglich.

Aus DE 44 13 346 C1 ist eine Kupplung zum Verbinden von zwei Leitungsenden eines Fluidleitungssystems bekannt, die über ein Aufnahmeteil und ein in das Aufnahmeteil einfügbares Sicherungsteil verfügt. Das Sicherungsteil ist mit einer umfänglich geschlossenen Ringhülse ausgebildet, an der über Federstege angeformte Hinterraststücke angebracht sind. Die Hinterraststücke liegen mit an ihren von der Ringhülse abgewandten Enden ausgebildeten Schrägflächen an einem an dem Aufnahmeteil ausgebildeten Abschlussbund an, um das Sicherungsteil gegen ein unbeabsichtigtes Herausrutschen aus dem Aufnahmeteil vor einem Einfügen eines Einsteckteiles zu sichern. Die Hinterraststücke dienen zum Hintergreifen eines an einem in die Kupplung einzufügenden Einsteckteil ausgebildeten Rückhalteringes, wobei die Hinterraststücke in in dem Aufnahmeteil ausgebildeten Freimachungen angeordnet sind. Durch eine radial innere Schrägfläche an jedem Hinterraststück ist ein gezeltes Lösen der Fluidleitungsverbindung möglich.

Aus DE 195 40 784 A1 ist eine Kupplung zum Verbinden von zwei Leitungsenden eines Fluidleitungssystems bekannt, die über ein Aufnahmeteil zur Aufnahme eines mit einem Rückhaltering ausgebildeten Einsteckteiles verfügt. Weiterhin ist ein in das Aufnahmeteil einfügbares ringartiges Sicherungsteil vorhanden, das zwei Hinterraststücke aufweist, mit denen ein Einsteckteil durch Hinterrasten des Rückhalteringes mit dem Aufnahmeteil verbindbar ist. Bei dieser vorbekannten Kupplung sind die Hinterraststücke über jeweils zwei seitlich angesetzte Federstege mit zwischen den Hinterraststücken liegenden Druckplatten verbunden, die in zugeordneten Öffnungen des Aufnahmeteiles angeordnet sind. Durch Ausüben von entgegengerichteten, radial nach innen gerichteten Druckkräften auf die Druckplatten bewegen sich die Hinterraststücke radial nach außen und geben somit ein in das Aufnahmeteil eingefügtes Einsteckteil frei, wobei durch die Anbindung über die seitlich angesetzten Federstege zum Erreichen des ordnungsgemäßen Hinterrastens des Rückhalteringes ein nicht unerheblicher Kraftaufwand erforderlich ist.

Der Erfindung liegt die Aufgabe zugrunde, eine Kupplung der eingangs genannten Art anzugeben, mit der bei einer möglichst einfachen Bauweise ein Einsteckteil mit relativ wenig Kraftaufwand sicher und unlösbar mit dem Aufnahmeteil verbindbar ist.

Diese Aufgabe wird bei einer Kupplung der eingangs genannten Art erfindungsgemäß mit den kennzeichnenden Merkmalen des Patentanspruches 1 gelöst.

Bei der erfindungsgemäßen Kupplung ist durch die den betreffenden Schutzraum völlig umschließende Abdeckwand ein Zugriff auf das in dem Schutzraum angeordnete Hinterraststück zum Bewegen desselben radial nach außen bis auf völlig unsachgemäße, gewaltsame Einwirkung verhindert. Dabei ist das Sicherungsteil selbst durch Zusammenwirken der Anschlagwand des oder jedes Blocklerstückes mit einer an dem Aufnahmeteil ausgebildeten Widerlagerwand zunächst an dem Aufnahmeteil gesichert sowie aufgrund der Anordnung des oder jedes Blockierstückes in einer Fensteröffnung bezüglich einer ordnungsgemäßen Anordnung kontrollierbar und nach Einfügen des Einsteckteiles in das Aufnahmeteil unlösbar mit dem Aufnahmeteil verbunden.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Explosionsansicht ein Ausführungsbeispiel einer erfindungsgemäßen Kupplung, die aus einem Aufnahmeteil, einem Sicherungsteil sowie einem einzigen Dichtring besteht, zusammen mit einem in das Aufnahmeteil einfügbaren Einsteckteil und
- Fig. 2: das Ausführungsbeispiel gemäß Fig. 1 mit einem in die erfindungsgemäße Kupplung eingefügten Einsteckteil.

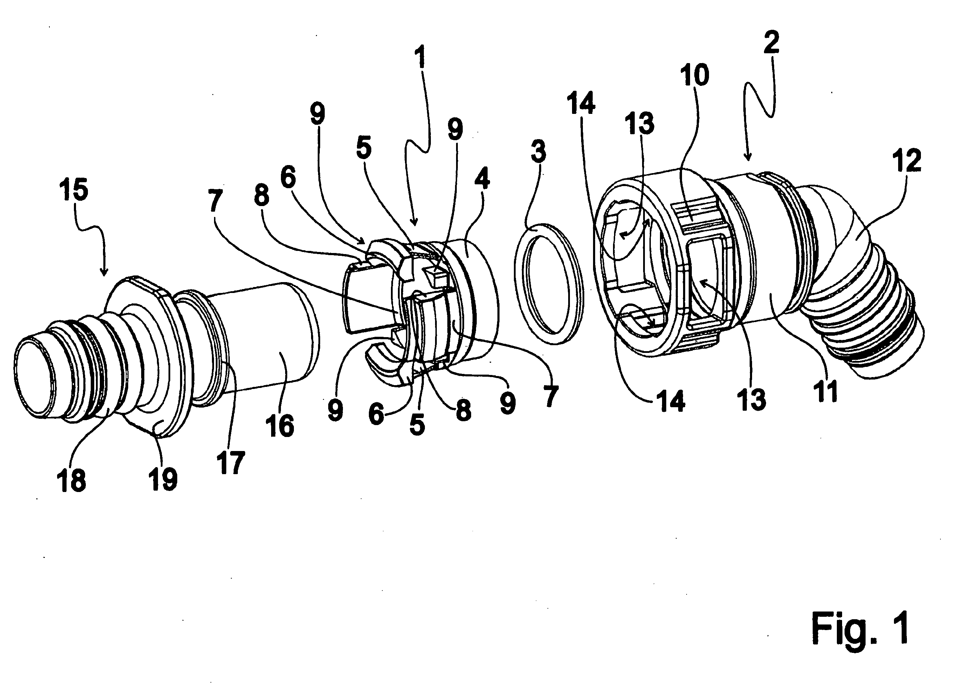

Fig. 1 zeigt in einer perspektivischen Explosionsansicht ein Ausführungsbeisplel einer erfindungsgemäßen Kupplung, das aus einem Sicherungsteil 1, einem Aufnahmeteil 2 und einer einzigen Ringdichtung 3 in Gestalt eines O-Ringes besteht. Das Sicherungsteil 1 verfügt über eine im Wesentlichen zylinderförmig ausgebildete Ringhülse 4, an der über an einer Stirnseite angesetzte sowie sich in axialer Richtung erstreckende erste Federstege 5 zwei diametral einander gegenüberliegende Hinterraststücke 6 angebunden sind. Weiterhin sind zwischen den beiden ersten Federstegen 5 angeordnete zweite Federstege 7 an die gleiche Stirnseite der Ringhülse 4 angesetzt, an denen ebenfalls diametral einander gegenüberliegende Blockierstücke 8 angeformt sind. Zwischen den ersten Federstegen 5 und den zweiten Federstegen 7 sind über die Stirnseite der Ringhülse 4 vorstehende Anschlagvorsprünge 9 ausgebildet.

Das Aufnahmeteil 2 des dargestellten Ausführungsbeispiels einer erfindungsgemäßen Kupplung verfügt über einen Kopfabschnitt 10, über einen Mittenabschnitt 11 sowie über einen auf der dem Kopfabschnitt 10 gegenüberliegenden Seite des Mittenabschnittes 11 angeordneten Anschlussstutzen 12, der in der sich bekannten Art und Weise mit einem Leitungsende eines Fluidleitungssystems verbindbar ist. Der Kopfabschnitt 10 ist mit diametral einander gegenüberliegenden Fensteröffnungen 13 ausgebildet, die so dimensioniert sind, dass in ihnen die Blockierstücke 8 positionierbar sind. Weiterhin lässt sich Fig. 1 entnehmen, dass der Kopfabschnitt 10 mit zwei einander gegenüberliegenden Schutzräumen 14 ausgebildet ist, die so dimensioniert sind, dass in ihnen die Hinterraststücke 6 mit einer gewissen Beweglichkeit radial nach außen positionierbar sind.

In Fig. 1 ist weiterhin ein Einsteckteil 15 dargestellt, das zum Verbinden mit der erfindungsgemäßen Kupplung über einen im Wesentlichen zylinderförmigen, außenseitig glattwandigen Endabschnitt 16 verfügt. Das Einsteckteil 15 ist mit einem umlaufenden, in radialer Richtung nach außen über den Endabschnitt 16 vorstehenden Rückhaltering 17 ausgebildet und weist auf der dem Endabschnitt 16 gegenüberliegenden Seite des Rückhalteringes 17 einen Anschlussstutzen 18 auf, der mit einem weiteren Leitungsende des Fluidleitungssystems verbindbar ist. Zwischen dem Rückhaltering 17 und dem Anschlussstutzen 18 ist ein umlaufender Stimbund 19 ausgebildet, der wie der Rückhaltering 17 radial nach außen über den Endabschnitt übersteht, gegenüber dem Rückhaltering 17 jedoch im Umfang größer dimensioniert ist.

Bei anderen, nicht dargestellten Ausführungen ist der Stimbund 19 in eine Wand eines einstückig mit dem Einsteckteil 15 ausgebildeten Bauteiles integriert, an das die erfindungsgemäße Kupplung aufsteckbar ist.

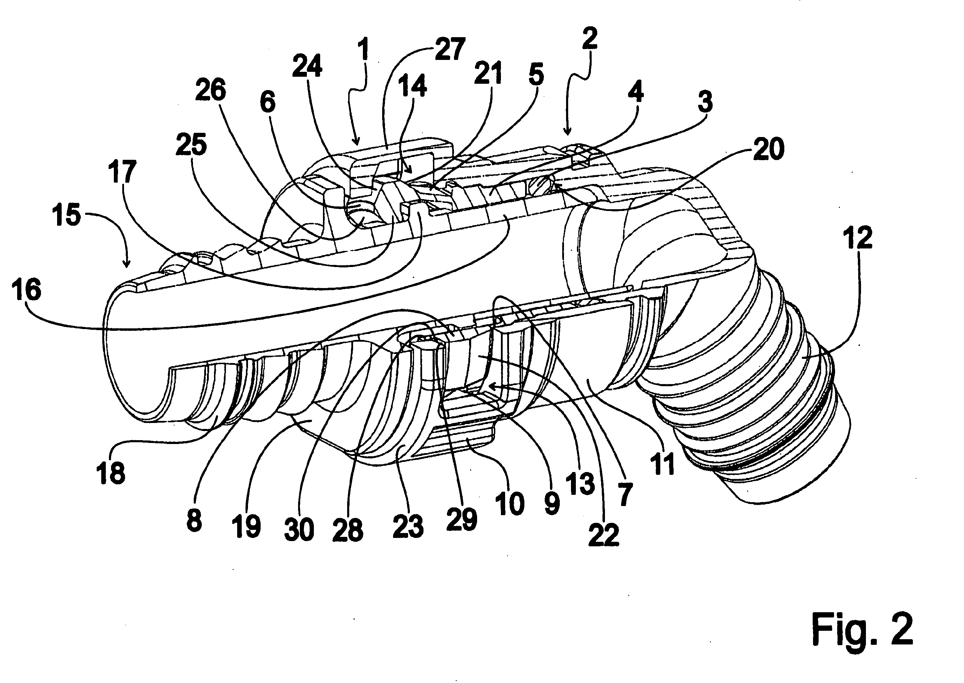

Fig. 2 zeigt das Ausführungsbeispiel gemäß Fig. 1 mit der erfindungsgemäßen Kupplung in zusammengefügter Anordnung, in der das Sicherungsteil 1 sowie die Ringdichtung 3 in das Aufnahmeteil 2 eingeführt sind, wobei der Rückhaltering 17 des Einsteckteiles 15 an den zum Schutz der Federstege 5, 7 dienenden Anschlagvorsprüngen 9 anliegt, ohne auf die Federstege 5, 7 einzuwirken. Die Ringdichtung 3 ist in dieser Anordnung in einer Ringnut 20 angeordnet und liegt nahe bei der den Federstegen 5, 7 gegenüberliegenden Stirnseite der Ringhülse 4. Aus Fig. 2 ist ersichtlich, dass die Ringhülse 4 radial außenseitig eine Stufenstruktur mit in Richtung der Federstege 5, 7 zunehmender Wandstärke aufweist, die an einer komplementär ausgebildeten, radial innenseitig weisenden Innenwand des Mittenabschnittes 11 des Aufnahmeteiles 2 anliegt. Dadurch ergibt sich ein Anschlag und eine Begrenzung eines die Ringdichtung 3 aufnehmenden Aufnahmeraumes auf der der Ringnut 20 gegenüberliegenden Seite.

Die Hinterraststücke 6 und die Blockierstücke 8 sind mit der Ringhülse 4 zugewandten Einführschrägen 21, 22 ausgebildet, um das Einführen des Sicherungsteiles 1 durch Aufgleiten der Einführschrägen 21, 22 an der Vorderseite eines den Kopfabschnitt 10 abschließenden Stimbundes 23 unter Auslenken der Federstege 5, 7 radial nach innen zu erleichtern. Die Hinterraststücke 6 sind weiterhin mit ihren Einführschrägen 21 gegenüberliegend angeordneten Andruckschrägen 24 ausgebildet, die einem abschlussseitigen Stimbund 23 des Aufnahmeteils 2 zugewandt sind, und weisen radial nach innen vorstehende Rastnasen 25 auf, die, wie in Fig. 2 dargestellt, zum Hintergreifen des Rückhalteringes 17 eines Einsteckteiles 15 dienen. Damit das Einfügen eines Einsteckteiles 15 vereinfacht ist, weisen die Rastnasen 25 angeschrägte Aufgleitschrägen 26 auf, die während des Einfügens des Einsteckteiles 15 bei Überfahren durch den Rückhaltering 17 zu einem relativ wenig kraftaufwändigen Auslenken der Hinterraststücke 6 radial nach außen führen, was durch entsprechende Dimensionierung der Schutzräume 14 behinderungsfrei eingerichtet ist.

Um die Hinterraststücke 6 vollständig von einem Zugriff von außen abzuschirmen, weisen die Schutzräume 14 vorzugsweise eine nach außen völlig geschlossene Abdeckwand 27 auf.

Die in der Darstellung gemäß Fig. 2 innerhalb der Fensteröffnungen 13 liegend dargestellten Blockierstücke 8 verfügen über den zweiten Federstegen 7 gegenüberliegend angeordnete, axial vorstehende Abschlussstege 28, die an der radial nach innen weisenden Innenwand des Stimbundes 23 anliegen. Weiterhin sind die Blockierstücke 8 jeweils mit einer radial ausgerichteten Anschlagwand 29 ausgebildet, die gegenüberliegend einer die Fensteröffnungen 13 begrenzenden, ebenfalls radial ausgerichteten Widerlagerwand 30 des Stimbundes 23 gegenüberliegen.

Bei dem dargestellten Ausführungsbeispiel sind die Blockierstücke 8 in ihrer Bewegung radial nach innen durch den Rückhaltering 17 so rechtzeitig gehindert, dass wenigstens Abschnitte der Anschlagwände 29 der Widerlagerwand 30 gegenüberliegend verbleiben. Dadurch ist bei Bewegen eines in die erfindungsgemäße Kupplung eingeführten Einsteckteiles 15 entgegen der Einführrichtung aus dem Aufnahmeteil 2 heraus durch Anschlag der Anschlagwand 29 an der Widerlagerwand 30 das Sicherungsteil 1 gegen Herausziehen aus dem Aufnahmeteil 1 gesichert, wobei durch den Kontakt der Andruckschrägen 24 mit dem Stimbund 23 die Rastnasen 25 in Richtung des Endabschnittes 16 des Einsteckteiles 15 gedrückt werden und damit ein Aufgleiten des Rückhalteringes 17 an den Rastnasen 25 verhindern.

Somit ist bei einer verhältnismäßig einfach aufgebauten, lediglich dreiteiligen Ausgestaltung der erfindungsgemäßen Kupplung das Einsteckteil 15 unlösbar verrastet.

## Patentansprüche

1. Kupplung zum Verbinden von zwei Leitungsenden eines Fluidleitungssystems mit einem Aufnahmeteil (2) zur Aufnahme eines mit einem Rückhaltering (17) ausgebildeten Einsteckteiles (15) und mit einem in das Aufnahmeteil (2) einfügbaren Sicherungsteit (1), das wenigstens ein Hinterraststück (6) aufweist, mit dem ein Einsteckteil (15) durch Hinterrasten des Rückhalteringes (17) mit dem Aufahmeteil (2) verbindbar ist, wobei das Sicherungsteil (1) eine umfänglich geschlossene Ringhülse (4) aufweiset, wobei an einer Seite der Ringhülse (4) über jeweils einen in radialer Richtung federnden sowie sich axial erstreckenden Federsteg (5) das oder jedes Hinterraststück (6) angesetzt ist und wobei das oder jedes Hinterraststück (6) einem an dem Aufnahmeteil (2) ausgebildeten Stimbund (23) gegenüberliegt, **dadurch gekennzeichnet, dass** wenigstens ein Blocklerstück (8) vorhanden ist, das über einen Federsteg (7) an die Ringhülse (4) angesetzt ist sowie eine radial ausgerichtete Anschlagwand (29) aufweist, dass in einem Kopfabschnitt (10) des Aufnahmeteiles (2) wenigstens eine jeweils einem Blockierstück (8) zugeordnete Fensteröffnung (13) ausgebildet ist, die so dimensioniert ist, dass in ihr das betreffende Blockierstück (8) positionierbar ist, und die eine radial ausgerichtete Widerlagerwand (30) aufweist, dass das oder jedes Blockierstück (8) so in der jeweiligen Fensteröffnung (13) angeordnet ist, dass die Anschlagwand (29) und die Widerlagerwand (30) einander gegenüberllegen, dass der Kopfabschnitt (10) des Aufnahmeteiles (2) für jedes Hinterraststück (6) mit einem von einer dem jeweiligen Hinterraststück (6) zugeordneten Abdeckwand (27) völlig umschlossenen Schutzraum (14) ausgebildet ist, der das betreffende Hinterraststück (6) von einem Zugriff von außen völlig abschirmt und so dimensioniert ist, dass das betreffende Hinterraststück (6) bei Einfügen des Einsteckteiles (15) behinderungsfrei radial nach außen auslenkbar ist, wobei das oder jedes Blockierstück (8) nach Einfügen des Einsteckteiles (15) durch das Einsteckteil (15) in der Federbewegung radial nach innen blockiert ist, so dass das Einsteckteil (15) bis auf unsachgemäße gewaltsame Einwirkung unlösbar mit dem Aufnahmeteil (2) verbunden ist.

2. Kupplung nach Anspruch 1, **dadurch gekennzeichnet, dass** an das oder jedes Blockierstück (8) ein sich in axialer Richtung über die Widerlagerwand (30) erstreckende Abschlusssteg (28) angeformt ist, der an einer radial nach innen weisenden Wand eines Stirnbundes (23) des Aufnahmeteiles (2) anliegt.

3. Kupplung nach Anspruch 1 oder Anspruch 2, **dadurch gekennzeichnet, dass** die Ringhülse (4) radial außenseitig eine Stufenstruktur mit in Richtung der Federstege (5, 7) zunehmender Wandstärke aufweist.

4. Kupplung nach einem der Ansprüche 1 bis 3, **dadurch gekennzeichnet, dass** das oder jedes Blockierstück (8) und das oder jedes Hinterraststück (6) in Richtung der Ringhülse (4) weisende Einführschrägen (21, 22) aufweisen.

5. Kupplung nach einem der Ansprüche 1 bis 4, **dadurch gekennzeichnet, dass** das oder jedes Hinterraststück (6) eine von der Ringhülse (4) wegweisende, radial nach außen angestelite Andruckschräge (24) und eine radial nach innen weisende Aufgleitschräge (26) aufweist.

## Claims

1. Coupling for connecting two pipe ends of a fluid pipe system, comprising a receiving part (2) for receiving an insertion part (15) formed with a retaining ring (17), and comprising a securing part (1) which can be introduced into the receiving part (2) and has at least one rear-locking piece (6), by means of which an insertion part (15) can be connected to the receiving part (2) by locking behind the retaining ring (17), the securing part (1) having a circumferentially closed annular sleeve (4), the or each rear-locking piece (6) being mounted on one side of the annular sleeve (4) via in each case a spring web (5) which is springy in the radial direction and extends axially, and the or each rear-locking piece (6) being opposite an end collar (23) formed on the receiving part (2), **characterized in that** at least one blocking piece (8) is present which is mounted via a spring web (7) on the annular sleeve (4) and has a radially oriented stop wall (29), **in that** at least one window opening (13) which is coordinated in each case with a blocking piece (8) and is dimensioned so that the relevant blocking piece (8) can be positioned in it and which has a radially oriented abutment wall (30) is formed in a top section (10) of the retaining part (2), **in that** the or each blocking piece (8) is arranged in the respective window opening (13) so that the stop wall (29) and the abutment wall (30) are opposite one another, **in that** the top section (10) of the receiving part (2) is formed, for each real-locking piece (6), with a protection space (14) which is completely enclosed by a covering wall (27) coordinated with the respective rear-locking piece (6) and which completely shields the relevant rear-locking piece (6) from access from the outside and is dimensioned so that the relevant rear-locking piece (6) can be deflected radially outwards without hindrance on introduction of the insertion part (15), the or each blocking piece (8) being blocked by the insertion part (15) in the spring movement in a radially inward direction after introduction of the insertion part (15), so that, in the absence of improper forceable action, the insertion part (15) is nondetachably connected to the receiving part (2).

2. Coupling according to Claim 1, **characterized in that** an end web (28) which extends in the axial direction over the abutment wall (30) and rests against a wall of an end collar (23) of the receiving part (2), which wall faces radially inwards, is formed on the or each blocking piece (8).

3. Coupling according to Claim 1 or Claim 2, **characterized in that** the annular sleeve (4) has, radially on the outside, a step structure with a wall thickness increasing in the direction of the spring webs (5, 7).

4. Coupling according to any of Claims 1 to 3, **characterized in that** the or each blocking piece (8) and the or each rear-locking piece (6) have insertion chamfers (21, 22) facing in the direction of the annular sleeve (4).

5. Coupling according to any of Claims 1 to 4, **characterized in that** the or each rear-locking piece (6) has a pressure chamfer (24) facing away from the annular sleeve (4) and pitched radially outwards and a sliding chamfer (26) facing radially inwards.

## Revendications

1. Raccord destiné à raccorder deux extrémités de conduites faisant partie d'un réseau de conduites véhiculant un fluide, se composant d'un élément de réception femelle (2) dans lequel est destiné à venir s'emmancher un élément embrochable mâle (15) muni d'une bague de retenue (17) et d'un organe de blocage en position (1) destiné à être inséré dans l'élément de réception femelle (2), qui comporte au moins un élément de cramponnement par derrière (6), au moyen duquel un élément embrochable mâle (15) peut être raccordé à l'élément de réception femelle (2) par l'action de cramponnement par derrière exercée par la bague de retenue (17), dans lequel l'organe de blocage en position (1) comprend une douille annulaire (4) fermée sur sa périphérie, dans lequel, sur un côté de la douille annulaire (4), l'élément ou chaque élément de cramponnement par derrière (6) est disposé attenant au-dessus respectivement d'un segment élastique (5) capable de réagir élastiquement dans le plan radial et s'étendant dans le plan axial, et dans lequel l'élément ou chaque élément de cramponnement par derrière (6) est disposé face à une collerette antérieure (23) que comporte l'élément de réception femelle (2), **caractérisé en qu'**il est prévu au moins un organe de blocage (8), qui est disposé attenant à la douille annulaire (4) par l'intermédiaire d'un segment élastique (7) et qui comporte également une paroi de butée (29) orientée dans le plan radial, en ce qu'il est prévu dans une portion de tête (10) de l'élément de réception femelle (2) au moins une ouverture formant fenêtre (13) correspondant respectivement à un organe de blocage (8), qui est dimensionnée dans une proportion telle que l'organe de blocage (8) qui lui est associé peut être positionné dans celle-ci et qui comporte une paroi de contact d'appui (30) orientée dans le plan radial, en ce que l'organe ou chaque organe de blocage (8) est disposé dans l'ouverture formant fenêtre qui lui correspond respectivement dans des conditions telles que la paroi de butée (29) et la paroi de contact d'appui (30) sont disposées face à face, en ce que la portion de tête (10) de l'élément de réception femelle (2) comporte, pour chaque élément de cramponnement par derrière (6), un espace de protection (14) complètement entouré par une paroi de recouvrement (27) correspondant à l'élément de cramponnement par derrière respectif (6), qui empêche absolument d'accéder depuis l'extérieur à l'élément de cramponnement par derrière (6) en question et qui est dimensionné dans une proportion telle que l'élément de cramponnement par derrière (6) en question peut prendre, sans rencontrer la moindre interférence, une position déportée vers l'extérieur dans le plan radial lors de l'emmanchement de l'élément embrochable mâle (15), l'organe ou chaque organe de blocage (8) étant en l'occurrence, après l'emmanchement de l'élément embrochable mâle (15), empêché de se mouvoir dans le plan radial vers l'intérieur par réaction élastique, par suite de l'action exercée par l'élément embrochable mâle (15), ce qui fait que l'élément embrochable mâle (15) est, sauf en cas de sollicitations intempestives exercées en forçant, raccordé de manière indissociable à l'élément de réception femelle (2).

2. Raccord selon la revendication 1, **caractérisé en ce que** l'organe ou chaque organe de blocage (8) comporte, rendue solidaire de celui-ci par moulage, une nervure terminale (28) s'étendant dans le sens axial au-dessus de la paroi de contact d'appui (30), qui se trouve en contact d'application sur une paroi orientée vers l'intérieur dans le plan radial de la collerette antérieure (23) de l'élément de réception femelle (2).

3. Raccord selon la revendication 1 ou la revendication 2, **caractérisé en ce que** la douille annulaire (4) présente, sur sa partie extérieure dans le plan radial, une configuration étagée en gradins successifs, dont l'épaisseur de paroi va en augmentant dans la direction des segments élastiques (5, 7).

4. Raccord selon l'une des revendications 1 à 3, **caractérisé en ce que** l'organe ou chaque organe de blocage (8) et l'élément ou chaque élément de cramponnement par derrière (6) comportent des portions inclinées d'introduction orientées dans la direction de la douille annulaire (4).

5. Raccord selon l'une des revendications 1 à 4, **caractérisé en ce que** l'élément ou chaque élément de cramponnement par derrière (6) comporte une portion inclinée de poussée en position (24) disposée vers l'extérieur dans le plan radial et une portion inclinée de glissement (26) orientée vers l'intérieur dans le plan radial.
